# EUROPEAN PATENT APPLICATION

(11) **EP 4 635 286 A1**
(43) Date of publication of application: **22.10.2025**
(21) Application number: 25170247.8
(22) Date of filing: 14.04.2025
(51) Int. Cl.: A01D 34/86, A01D 34/43

(54) **STRUTTURA DI SUPPORTO ACCOPPIABILE E FISSABILE AD UN TRATTORE AGRICOLO PER IL SUPPORTO DI UNA MACCHINA TOSAERBA CHE DEVE ESSERE MONTATA LATERALEMENTE AL TRATTORE**

(30) Priority: 15.04.2024 IT 202400008449
(71) Applicant: Hymach S.r.l., 45039 Stienta (Rovigo) (IT)
(72) Inventor: RICCI, Giacinto, 45039 Stienta (RO) (IT)
(74) Representative: Dall'Olio, Christian

(57) **Abstract**

The support structure (100) comprises: a first frame (1) fixable by means of a first frame member (11) to a first lateral side (T1) of a tractor (T) and having a second frame member (21) which is arranged raised with respect to an engine hood (CM) of the tractor (T); a second frame (2) fixable by means of a third frame member (21) to a second lateral side (T2) of the tractor (T) and having a fourth frame member (22) which is raised with respect to the engine hood (CM) of the tractor (T); with the first frame (1) comprising at least an anchoring element (10) for anchoring and fixing a mower machine (M) laterally to the tractor (T).

The support structure (100) comprises a fifth frame member (3), hinged to the second frame member (21), and activatable in rotation by means of an actuator element (4) between a first operating configuration (O1), wherein the fifth frame member (3) is positionable superiorly and transversally to the engine hood (CM) of the tractor (T) for fixing thereof by quick coupling/uncoupling means (5) to the second frame member (22) of the second frame (2), and a second non-operating configuration (O2) in which the fifth frame member (3), following the unhooking thereof by the quick coupling/uncoupling means (5) from the second frame member (22), is positioned in a raised and distant position with respect to the engine hood (CM).

## Description

### DESCRIPTION OF THE INVENTION

The present invention relates to the technical sector concerning grass mower machines, also known as hedge trimmers, for cutting grass at the margins of a road or motorway surface, roadsides and, along even deep ditches or canal sides, field areas and like places.

Mower machines generally comprise a rotor cutting head which is borne by a hinged arms unit, possibly telescopic, which are movable in rotation with respect to one another by means of hydraulic jacks so as to assume respective angular positions of minimum or maximum extension.

Mower machines are usually mounted and fixed with the use of the hinged arms unit to an agricultural tractor in various ways.

The activating commands of the cutting head and the movement of the hinged arms are thus arranged directly in the tractor cabin, so that the operator can activate the mower machine during the movement of the tractor.

For example, the hinged arms unit can be mounted and fixed to the agricultural tractor posteriorly, anteriorly or even laterally to the engine hood of the agricultural tractor.

In this last case, for the positioning of the mower machine laterally to the agricultural tractor, i.e. on a side of the relative engine hood, support structures are used which are fixed to the appropriate portions of the lateral sides of the agricultural tractor so as to provide a lateral anchoring point for the mower machine which is located at a side (for example the right side) of the agricultural tractor.

In particular, the present invention relates to a support structure, couplable to an agricultural tractor, for supporting a mower machine which is to be mounted laterally to the agricultural tractor.

A known support structure comprises:
a first frame which is configured so as to comprise at least a first frame member for fixing, with first fixing means, the first frame to a portion of a first lateral side of an agricultural tractor, and at least a second frame member which, when the first frame is fixed to the portion of the first lateral side of the tractor, is positioned longitudinally to the tractor and in a raised position with respect to the engine hood of the tractor,
a second frame which is configured so as to comprise at least a third frame member for fixing, using second fixing means, the second frame to a portion of a second lateral side of the agricultural tractor, and at least a fourth frame member which, when the second frame is fixed to the portion of the second lateral side of the tractor is arranged longitudinally to the tractor, in a raised position with respect to the engine hood of the tractor and facing the second frame member of the first frame.

The known support structure further comprises at least a fifth frame member which is arranged superiorly and transversally to the engine hood between the second frame member of the first frame and the fourth frame member of the second frame and fixed thereto at the relative ends.

The fixing between the ends of the fifth frame member and, respectively, the second frame member of the first frame and the fourth frame member of the second frame is obtained using adequate bolts.

The known support structure further comprises at least a sixth frame member which is positioned inferiorly and transversally to the engine hood of the agricultural tractor and fixed to the relative ends respectively to the first frame member of the first frame and to the third frame member of the second frame, by means of bolts. In this way, the support structure forms a sort of frame fixed to the two lateral sides of the agricultural tractor and which is arranged about the engine hood.

Further, the support structure comprises, at the first frame, at least an anchoring element for anchoring and fixing a mower machine laterally to the agricultural tractor.

In this regard, the hinged arms unit of the mower machine comprises, at an end thereof opposite the end bearing the cutting head, at least a relative anchoring plate for coupling and fixing with the anchoring element present in the first frame.

Further, the support structure comprises, at the second frame, a seat for positioning a ballast which is used for counterbalancing the weight of the mower machine.

With this configuration of the support structure, which forms a sort of frame surrounding the engine hood, and fixed to both lateral sides of the agricultural tractor, and with the presence of the ballast arranged on the lateral side opposite the lateral side of the agricultural tractor to which the mower machine is anchored, the agricultural tractor can support the whole weight of the agricultural machine, even when the hinged arms unit is arranged in the maximum extension of its parts, to enable the cutting head to reach the parts furthest from the position of the agricultural tractor.

A support structure of this type, however, has some drawbacks.

In fact, during the grass cutting operations, whenever a breakdown or malfunctioning occurs of the agricultural tractor engine, which requires having to stop the tractor and open the hood to inspect the engine, it is necessary to proceed to the removal of the at least the fifth frame member which is positioned superiorly and transversally to the engine hood, and fixed by bolts to both the second frame member of the first frame and to the fourth frame member of the second frame.

This operation, however, is not at all simple for the operator to carry out, as it can occur in isolated places in which the operator is forced to do the operation alone, and manually, first by unscrewing and removing the fixing bolts from the two ends of the fifth frame member, and then by raising, once more manually, the fifth frame member so as then to position it on the ground surface.

The carrying out of these operations can be very tricky, also owing to the weight of the fifth frame member, but is especially very dangerous for the well-being of the operator, who will also have to climb onto the wheels of the tractor or lean out from the steps, in order to be able to carry out the operation of unscrewing the bolts and then raising and removal of the fifth frame member, in order than to gain access to the engine hood.

An aim of the present invention is therefore to provide a new support structure, couplable and fixable to an agricultural tractor, for supporting a mower machine which is to be mounted laterally to the tractor and which is able to obviate the drawbacks previously cited with respect to the prior art.

In particular, an aim of the invention is to provide a novel support structure which enables, when needed, having access to the engine hood of the tractor in a simple and immediate way, and without requiring difficult operations or placing the well-being of the operator in peril.

The above aims are obtained with a support structure, couplable and fixable to an agricultural tractor, for supporting a mower machine which is to be mounted laterally to the tractor, according to the contents of the claims.

The characteristics of the invention are specified in the following which includes a preferred, but not exclusive, embodiment, with reference to the accompanying tables of drawings, in which:
- figure 1 is a schematic perspective view of the support structure of the invention in a first possible non-operating configuration;
- figure 2 illustrates the support structure of figure 1 in a second possible operating configuration;
- figure 3 illustrates, in a schematic perspective view from a different angle, the support structure of figure 1 together with a mower machine, comprising a cutting head and a hinged arms unit for supporting the cutting head, which is destined to be fixed to the support structure once the support structure has been mounted and fixed to an agricultural tractor;
- figure 4 illustrates, in a schematic perspective view, the support structure of the invention mounted and fixed to an agricultural tractor, and arranged in the first operating configuration, and with the mower machine fixed to the support structure by means of the relative hinged arms unit which arms are arranged in an extension configuration thereof for enabling the cutting of the grass;
   figure 5 is a perspective view from a different angle of what is illustrated in figure 4;
- figure 6 illustrates, in a schematic perspective view, the support structure of the invention mounted and fixed to an agricultural tractor, and arranged in the second non-operating configuration in which it is possible to access the engine hood of the agricultural tractor, and with the cutting head of the mower machine, fixed to the support structure by means of the relative hinged arms unit, which is rested on the ground surface;
   figure 7 is a perspective view from a different angle to what is illustrated in figure 6;
- figure 8 illustrates detail A of figure 4 in larger scale;
- figure 9 illustrates detail B of figure 6 in larger scale;
- figure 10 illustrates detail C of figure 5 in larger scale;
- figure 11 illustrates detail D of figure 7 in larger scale;
- figure 12 illustrates detail K of figure 3 in larger scale.

With reference to the accompanying tables of the drawings, reference numeral (100) denotes the support structure, couplable and fixable to an agricultural tractor (T), for supporting a mower machine (M) which is to be mounted laterally to the tractor (T), object of the present invention, in its entirety.

The support structure (100) of the invention is suitable to be mounted and fixed to a tractor (T) to provide the support for the anchoring and fixing, laterally to the tractor (T), of a mower machine (M) of a type comprising a cutting head (V) borne, and movable, by a hinged arms unit (BA) destined to be connected and fixed to the support structure (100).

The support structure (100) comprises:
a first frame (1) which is configured so as to comprise at least a first frame member (11) for fixing, by first fixing means (F1), the first frame (1) to a portion of a first lateral side (T1) of the tractor (T), and so as to comprise at least a second frame member (12) which is arranged in such a way, when the first frame (1) is fixed to the portion of the first lateral side (T1) of the tractor (T), the second frame member (12) is positioned longitudinally to the tractor (T) and in a raised position with respect to the engine hood (CM) of the tractor (T);
a second frame (2) which is configured so as to comprise at least a third frame member (21) for fixing, by second fixing means (F2), the second frame (2) to a portion of a second lateral side (T2) of the tractor (T), and so as to comprise at least a fourth frame member (22) which is arranged in such a way, when the second frame (2) is fixed to the portion of the second lateral side (T2) of the tractor (T), the fourth frame member (22) is positioned longitudinally to the tractor (T), in a raised position with respect to the engine hood (CM) of the tractor (T) and facing the second frame member (12) of the first frame (1).

The first frame (1) is fixable, by means of the first frame member (11), to special first fixing points which are usually and suitably present in the first lateral side (T1) of the tractor (T), below the engine hood (CM), and the second frame (2) is fixable, by means of the third frame member (21), to second fixing points which are usually and suitably present in the second lateral side (T2) of the tractor (T), below the engine hood (CM).

The first frame (1), for example, can be formed by an assembly of profiled members or longitudinal members which are arranged, and reciprocally connected, to one another to form a sort of quadrangular or crosslinked frame in which the first frame member (11) constitutes a first side of the frame and the second frame member (12) constitutes a second side of the frame.

In turn, the second frame (2), for example, can be formed by an assembly of profiled members or longitudinal members which are arranged, and reciprocally connected, to one another to form a sort of quadrangular or crosslinked frame in which the third frame member (21) constitutes a first side of the frame and the fourth frame member (22) constitutes a second side of the frame.

The support structure (100) is further made so as to comprise at least a fifth frame member (3) configured to be positionable superiorly and transversally to the engine hood (CM) of the tractor (T) between the second frame member (12) of the first frame (1) and the fourth frame member (22) of the second frame (2).

The first frame (1) is realised in such a way as to further comprise at least an anchoring element (10) which is conformed so as to enable, once the first frame (1) has been fixed to the portion of the first lateral side (T1) of the tractor (T), the fixing of at least a respective anchoring plate (P) present at an end of a hinged arms unit (BA) which bear a cutting head (V) of the mower machine (M).

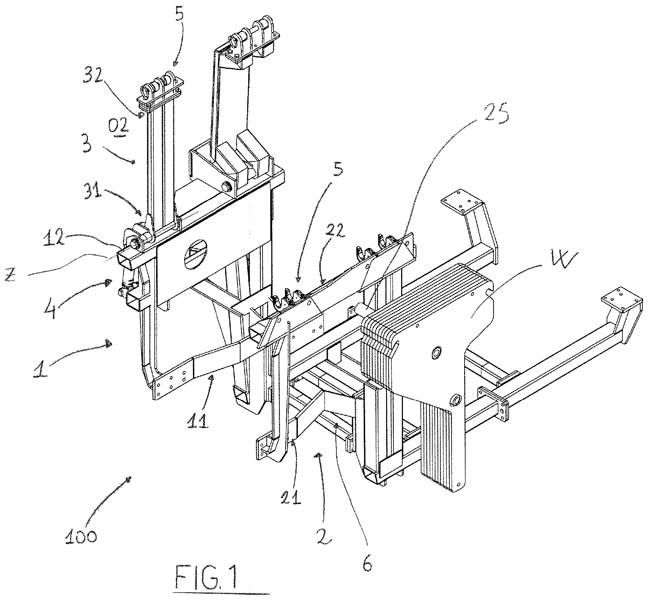

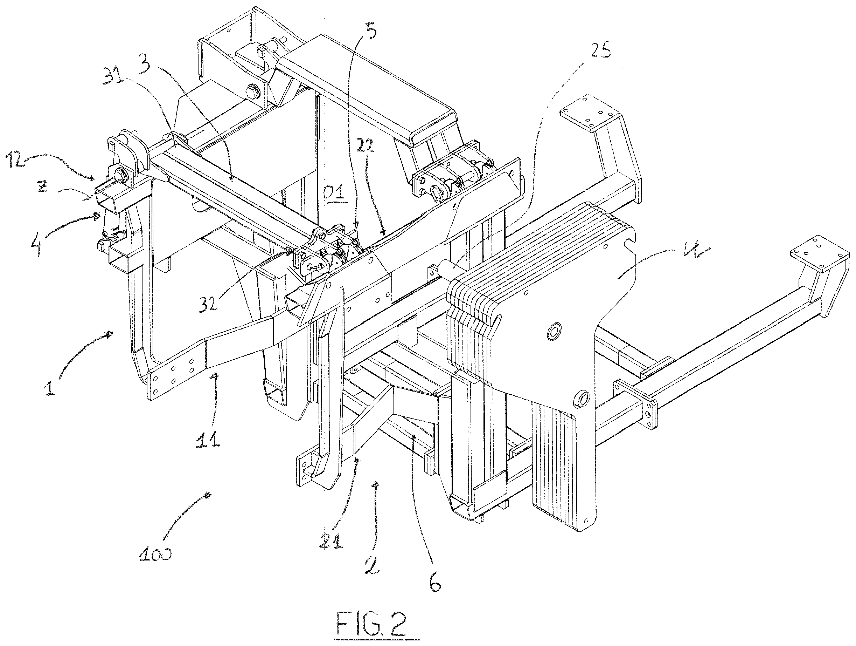

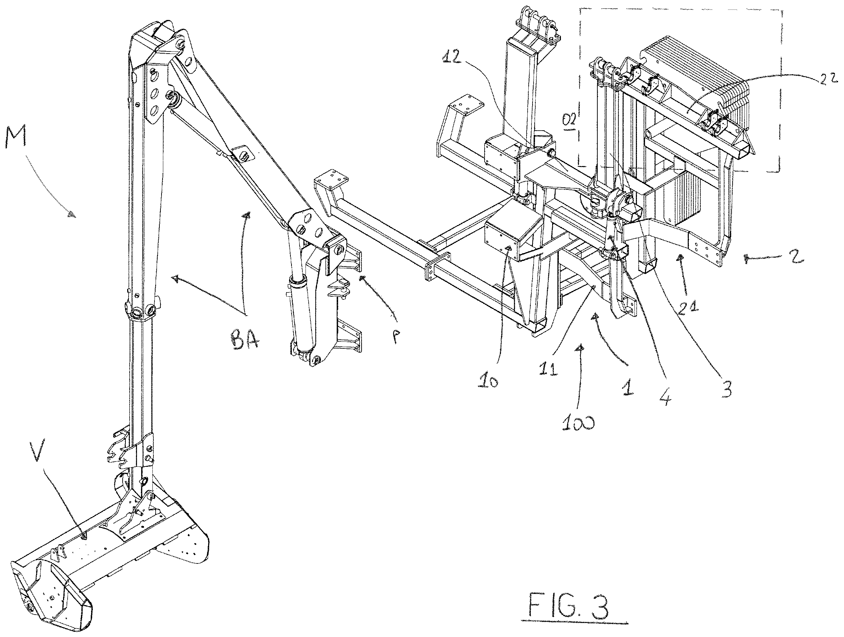

The special characteristics of the support structure (100) of the invention consist in the fact that it is realised in such a way that the at least a fifth frame member (3) comprises a first end (31) which is hinged to the second frame member (12) of the first frame (1) rotatably about a rotation axis (Z), and the fact that it comprises an actuator element (4) configured to activate the at least a fifth frame member (3) in rotation about the rotation axis (Z) to be able to move the at least a fifth frame member (3) between a first operating configuration (O1) (see for example figure 2 and figures 4 and 5), wherein the fifth frame member (3) is positionable superiorly and transversally to the engine hood (CM) of the tractor (T) and with a respective second end (32) arranged at the fourth frame member (22) of the second frame (2), and a second non-operating configuration (O2) (see for example figures 1 and 3 and figures 6 and 7), in which the fifth frame member (3) is positioned in a raised and distant position with respect to the engine hood (CM).

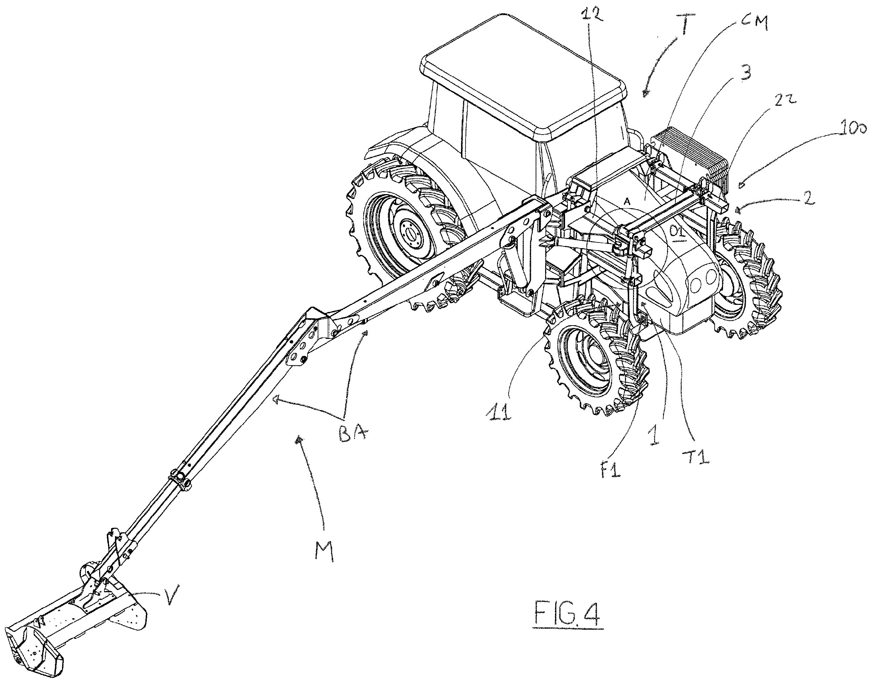

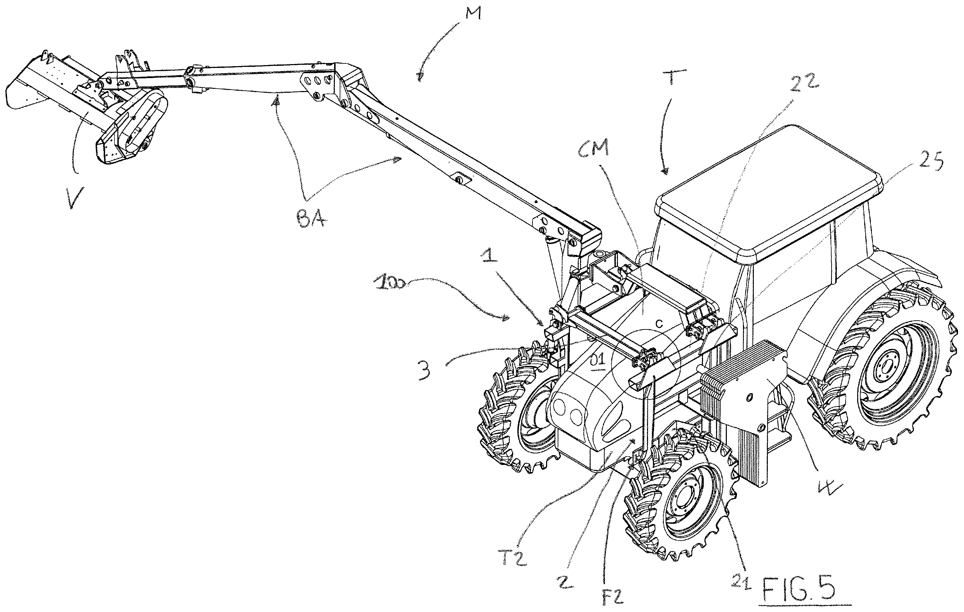

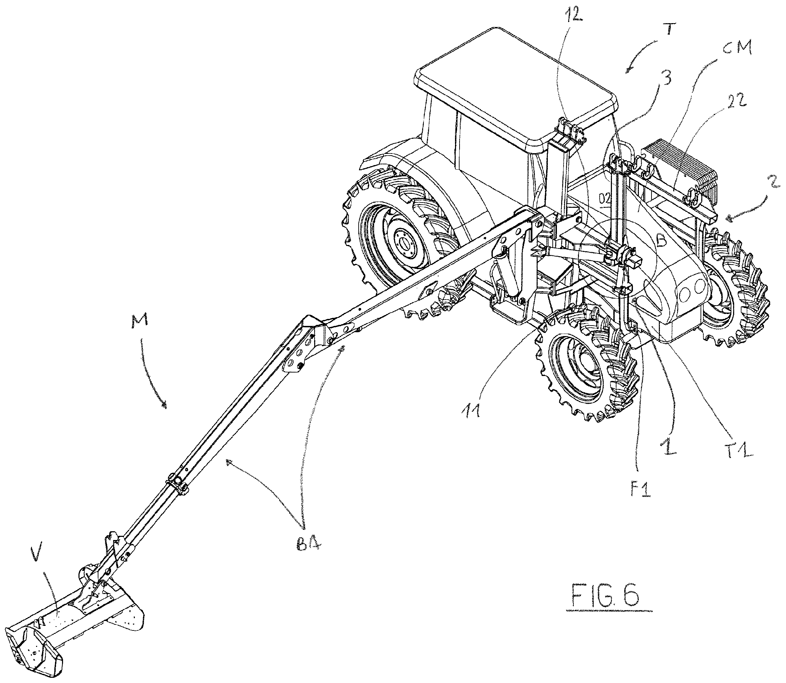

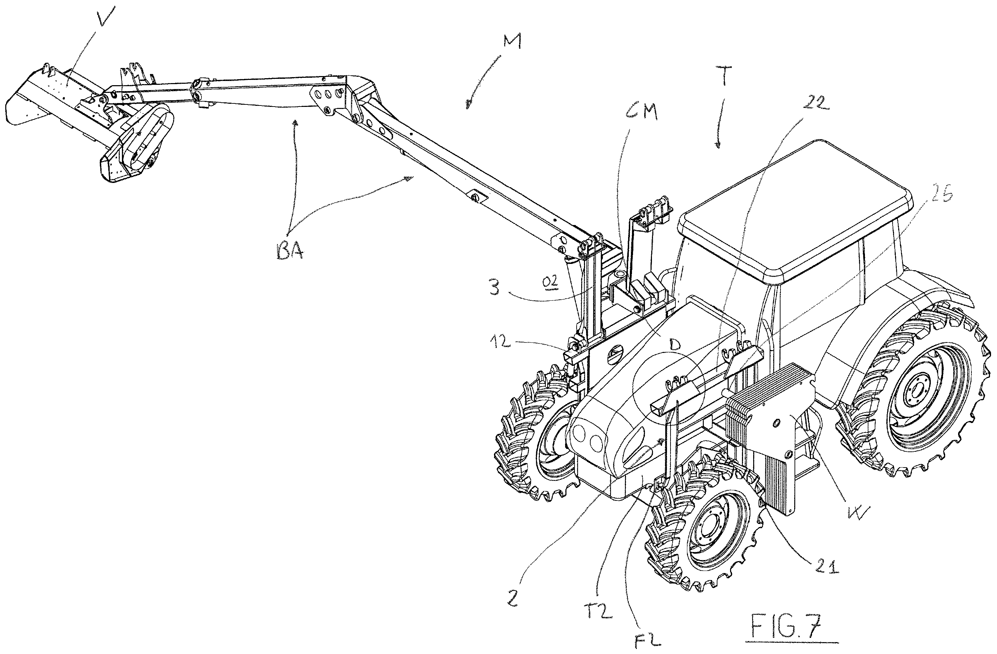

Further, the support structure (100) of the invention is made in such a way as to comprise quick coupling/uncoupling means (5) which are configured to allow a quick coupling between the second end (32) of the fifth frame member (3) and the fourth frame member (22) of the second frame (2), when the fifth frame member (3) is positioned in the first operating configuration (O1), so as to enable use of the mower machine (M) during the movement of the tractor (T) (see for example figures 4 and 5), and to enable a quick release of the second end (32) of the fifth frame member (3) from the fourth frame member (22) of the second frame (2), when the fifth frame member (3) is to be positioned in the second non-operating configuration (O2) to enable access to the engine hood (CM) (see for example figures 6 and 7).

In this way, in a case where, during the grass cutting operations, and therefore during the movement of the tractor, for any reason the need should emerge to need to open the engine hood, the operator will easily unhook the second end (32) of the fifth frame member (3) from the fourth frame member (22) of the second frame (2) by acting on the quick coupling/uncoupling means (5), and then, by activating the actuator element (4), automatically moving the fifth frame member (3) from the first operating configuration (O1) to the second operating configuration (O2), raising and distancing the fifth frame member from the engine hood (CM) which will therefore be easily accessible.

The support structure (100) can be realised in such a way as also to comprise two or more fifth frame members hinged to the second frame member (12) of the first frame (1) with each being activatable by a relative actuator element to assume the two operating configurations, mentioned in the foregoing, and respective quick coupling/uncoupling means.

Other advantageous characteristics of the apparatus of the support structure (100) invention are described in the following.

In the illustrated embodiment, the actuator element (4) preferably comprises a linear actuator (41) having a rod (40) which is connected to a drive transmission element (43) hinged to the rotation axis (Z) of the fifth frame member (3).

In this case, the linear actuator (4) is configured to alternatingly translate the rod (40) in translation so as to activate the drive transmission element (43) in rotation and then to activate the fifth frame member (3) in rotation about the rotation axis (Z).

The rod (40) of the linear actuator (41) can be activatable pneumatically (in the case of use of a pneumatic linear actuator), hydraulically (in the case of use of a hydraulic linear actuator) or electrically (in the case of use of an electrical linear actuator).

The activating commands of the linear actuator are positionable directly in the cabin of the tractor and are connected to the linear actuator by appropriate connection cables.

Alternatively, according to a further possible embodiment, not illustrated, the actuator element (4) can be constituted by a rotary actuator directly connected to the rotation axis (Z) of the fifth frame member (3).

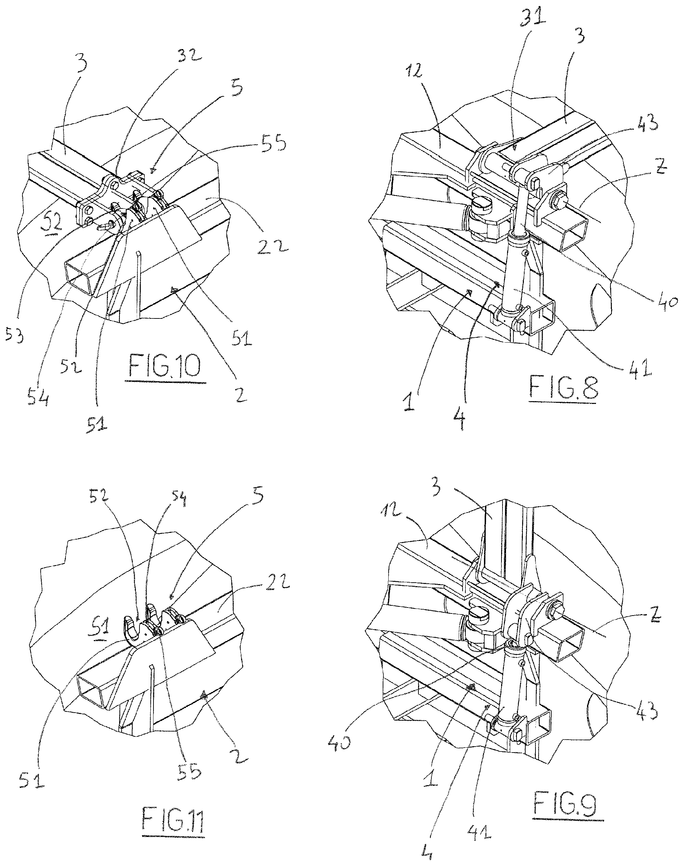

According to the preferred embodiment illustrated in the figures of the drawings, the quick coupling/uncoupling means (5), see for example figures 10, 11 and 12, can be realised in such a way as to comprise: at least a first hooking element (51), which is arranged at the fourth frame member (22) of the second frame (2) and which is conformed in such a way as to comprise a seat (52); at least a second hooking element (53) arranged at the second end (32) of the fifth frame member (3) and which is conformed in such a way as to be insertable into the seat (52) of the first hooking element (51), and at least a blocking element (54), rotatably coupled to the first hooking element (51) and which is movable by using a respective lever (55).

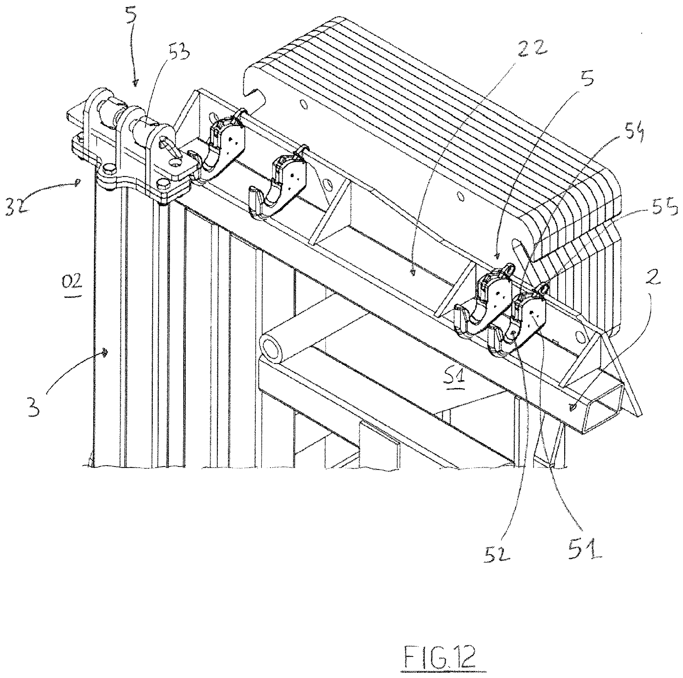

The blocking element (54) is movable using the lever (55) between:
a first unhooked position (S1) (see figures 11, 12), wherein the blocking element (54) is in a first open position of the seat (52) to enable the insertion of the second hooking element (53) into the seat (52), when the fifth frame member (3) is to be positioned in the first operating configuration (O1), or the extraction of the second hooking element (53) from the seat (52), when the fifth frame member (3) is to be positioned in the second non-operating configuration (O2),
and a second hooked position (S2) (see figure 10), wherein the blocking element (54) is in a second closed position of the seat (52) to block the second hooking element (53) in the seat (52) once the fifth frame member (3) is positioned in the first operating configuration (O1) with the second hooking element (53) inserted in the seat (52).

The blocking element (54) is rotatably coupled to the first hooking element (51) by interposition of elastic means, for example a spring (not illustrated), in such a way that the blocking element (54), which is moved by means of the lever (55) into the hooking position (S2), exerts a pushing action against the second hooking element (53) so as to retain it in position in the seat (52), and thus block the second end (32) of the fifth frame member (3) to the fourth frame member (22) of the second frame (2).

Other modalities of realisation of the quick coupling/uncoupling means can also be provided, for example comprising a bolt that can be inserted in or extracted from a saddle and blocked in the saddle by using of a pin, or other equivalent method, all however falling within the ambit of protection of the present invention.

In a further aspect, the support structure (100) is realised in such a way that the second frame (2) comprises positioning means (25) configured for the positioning and support of a ballast (W) for counterbalancing the weight of the mower machine (M) once anchored and fixed to the first frame (1).

Further, the support structure (100) can comprise at least a sixth frame member (6) which is positionable inferiorly and transversally to the engine hood (CM) of the tractor (T) and fixable at the respective ends respectively to the first frame (1) and to the second frame (2), in order to realise a support structure which extends about the hood of the engine, and fixed to both lateral sides of the tractor so as to effectively support the mower machine during use thereof.

## Claims

1. A support structure (100), couplable and fixable to an agricultural tractor (T), for supporting a mower machine (M) which is to be mounted laterally to the tractor (T), the support structure (100) comprising:
a first frame (1) which is configured so as to comprise at least a first frame member (11) for fixing, by first fixing means (F1), the first frame (1) to a portion of a first lateral side (T1) of the tractor (T), and so as to comprise at least a second frame member (12) which is arranged in such a way, when the first frame (1) is fixed to the portion of the first lateral side (T1) of the tractor (T), as to be positioned longitudinally to the tractor (T) and in a raised position with respect to the engine hood (CM) of the tractor (T);
a second frame (2) which is configured so as to comprise at least a third frame member (21) for fixing, by second fixing means (F2), the second frame (2) to a portion of a second lateral side (T2) of the tractor (T), and so as to comprise at least a fourth frame member (22) which is arranged in such a way, when the second frame (2) is fixed to the portion of the second lateral side (T2) of the tractor (T), as to be positioned longitudinally to the tractor (T), in a raised position with respect to the engine hood (CM) of the tractor (T) and facing the second frame member (12) of the first frame (1);
at least a fifth frame member (3) configured to be positionable superiorly and transversally to the engine hood (CM) of the tractor (T) between the second frame member (12) of the first frame (1) and the fourth frame member (22) of the second frame (2),
wherein the first frame (1) further comprises at least an anchoring element (10) which is conformed so as to enable, once the first frame (1) has been fixed to the portion of the first lateral side (T1) of the tractor (T), the fixing of at least a respective anchoring plate (P) present at an end of a hinged arms unit (BA) which bear a cutting head (V) of the mower machine (M),
**characterised in that** the at least a fifth frame member (3) comprises a first end (31) which is hinged to the second frame member (12) of the first frame (1) rotatably about a rotation axis (Z),
and **in that** it comprises an actuator element (4) configured to activate the at least a fifth frame member (3) in rotation about the rotation axis (Z) to be able to move the at least a fifth frame member (3) between a first operating configuration (O1), wherein the fifth frame member (3) is positionable superiorly and transversally to the engine hood (CM) of the tractor (T) and with a respective second end (32) arranged at the fourth frame member (22) of the second frame (2), and a second non-operating configuration (O2) in which the fifth frame member (3) is positioned in a raised and distant position with respect to the engine hood (CM),
and **in that** it comprises quick coupling/uncoupling means (5) which are configured to allow a quick coupling between the second end (32) of the fifth frame member (3) and the fourth frame member (22) of the second frame (2), when the fifth frame member (3) is positioned in the first operating configuration (O1), so as to enable use of the mower machine (M) during the movement of the tractor (T), and to enable a quick release of the second end (32) of the fifth frame member (3) from the fourth frame member (22) of the second frame (2), when the fifth frame member (3) is to be positioned in the second non-operating configuration (O2) to enable access to the engine hood (CM).

2. The support structure (100) as claimed in claim 1, wherein the actuator element (4) comprises a linear actuator (41) having a rod (40) connected with a drive transmission element (43) hinged to the rotation axis (Z) of the fifth frame member (3), wherein the linear actuator (4) is configured to alternatingly activate the rod (40) in translation so as to activate the drive transmission element (43) in rotation and then to activate the fifth frame member (3) in rotation about the rotation axis (Z).

3. The support structure (100) as claimed in claim 2, wherein the rod (40) of the linear actuator (41) is pneumatically, hydraulically or electrically activatable.

4. The support structure (100) as claimed in claim 1, wherein the actuator element (4) is a rotary actuator connected to the rotation axis (Z) of the fifth frame member (3).

5. The support structure (100) as claimed in any one of the preceding claims,
wherein the quick coupling/uncoupling means (5) comprise:
at least a first hooking element (51) arranged at the fourth frame member (22) of the second frame (2) which is conformed in such a way as to comprise a seat (52),
at least a second hooking element (53) arranged at the second end (32) of the fifth frame member (3) and conformed in such a way as to be inserted into the seat (52) of the first hooking element (51),
and at least a blocking element (54) movable by a respective lever (55),
wherein the blocking element (54) is rotatably coupled to the first hooking element (51) and is movable using the lever (55) between:
a first unhooked position (S1), wherein the blocking element (54) is in a first open position of the seat (52) to enable the insertion of the second hooking element (53) into the seat (52), when the fifth frame member (3) is to be positioned in the first operating configuration (O1), or the extraction of the second hooking element (53) from the seat (52), when the fifth frame member (3) is to be positioned in the second non-operating configuration (O2),
and a second hooked position (S2), wherein the blocking element (54) is in a second closed position of the seat (52) to block the second hooking element (53) in the seat (52) once the fifth frame member (3) is positioned in the first operating configuration (O1) with the second hooking element (53) inserted in the seat (52).

6. The support structure (100) as claimed in any one of the preceding claims, wherein the second frame (2) comprises positioning means (25) configured for the positioning and support of a ballast (W) for counterbalancing the weight of the mower machine (M) once anchored and fixed to the first frame (1).

7. The support structure (100) as claimed in any one of the preceding claims, comprising at least a sixth frame member (6) which is positionable inferiorly and transversally to the engine hood (CM) of the tractor (T) and fixable at the respective ends respectively to the first frame (1) and to the second frame (2).
